# EUROPEAN PATENT APPLICATION

(11) **EP 2 226 246 A2**
(43) Date of publication of application: **08.09.2010**
(21) Application number: 10153092.1
(22) Date of filing: 09.02.2010
(51) Int. Cl.: B64C 39/02, G05D 1/00

(54) **System and methods for displaying video with improved spatial awareness**

(30) Priority: 04.03.2009 US 398002
(71) Applicant: Honeywell International Inc., Morristown, NJ 07962 (US)
(72) Inventor: Whitlow, Stephen, Morristown, NJ 07962-2245 (US); Dorneich, Michael Christian, Morristown, NJ 07962-2245 (US); Feigh, Karen, Morristown, NJ 07962-2245 (US)
(74) Representative: Buckley, Guy Julian

(57) **Abstract**

Methods and systems are provided for displaying a video data stream captured by a surveillance module (106) associated with an aerial vehicle (100) during execution of a flight plan (304). A method comprises displaying a timeline (508) corresponding to the video data stream on a display device (202) associated with the aerial vehicle and displaying a first indicator (520) on the timeline. In accordance with one embodiment, the first indicator (520) corresponds to a first waypoint (306) of the flight plan (304), wherein the first indicator (520) is positioned on the timeline (508) such that the first indicator (520) corresponds to a first segment of the video data stream at a first time. The first time is based at least in part on a position of the aerial vehicle (100).

## Description

### TECHNICAL FIELD

The subject matter described herein relates generally to video surveillance applications, and more particularly, embodiments of the subject matter relate to methods for associating surveillance video data stream with a flight plan for an unmanned aerial vehicle.

### BACKGROUND

Unmanned vehicles, such as unmanned aerial vehicles (UAVs), are currently used in a number of military and civilian applications. One common application involves using the unmanned aerial vehicle for video and/or photographic surveillance of a particular object or area of interest. In general, these vehicles may either be operated manually (e.g., via a remote control) or autonomously based upon a predetermined flight plan. Generally, the flight plan comprises a predefined series of waypoints, that is, a series of points in three-dimensional space that define the desired flight path for the vehicle. In most applications, the goal of the flight plan is to garner intelligence about a particular object or region rather than simply fly the vehicle through a series of waypoints.

Generally, an operator reviews streaming data (e.g., video) captured by the unmanned aerial vehicle remotely from a ground control station. The operator attempts to glean useful intelligence information by analyzing and interpreting the streaming video. Often, the operator manipulates the streaming video in order to thoroughly analyze the captured video, for example, by zooming in on a particular region or slowing down, pausing, or rewinding the video stream. As a result, the operator is often reviewing buffered or past content (rather than real-time streaming video) and manually analyzing and/or characterizing the content. Thus, if the operator is reviewing the buffered video, the operator may be unaware of real-time events or the real-time status of the unmanned aerial vehicle. For example, the operator may be unable to determine the current status of the unmanned aerial vehicle within the flight plan or quickly ascertain the relationship between the flight plan and the video segment currently being reviewed.

In some prior art surveillance applications, the operator utilizes a separate display that shows the flight plan and/or status of the unmanned aerial vehicle within the flight plan and attempts to manually correlate the video segment with the flight plan. In addition to increasing the burden on the operator, the result of the manual correlation is inexact, if not inaccurate, and thereby degrades the overall quality of the intelligence information.

### BRIEF SUMMARY

In accordance with one embodiment, a method is provided for displaying a video data stream captured by a surveillance module associated with an aerial vehicle during execution of a flight plan. The method comprises displaying a timeline corresponding to the video data stream on a display device associated with the aerial vehicle, and displaying a first indicator on the timeline. The first indicator corresponds to a first waypoint of the flight plan, and the first indicator is positioned on the timeline such that the first indicator corresponds to a first segment of the video data stream at a first time. The first time is based at least in part on a position of the aerial vehicle.

In another embodiment, another method is provided for displaying video information obtained from a surveillance module. The method comprises displaying a progress bar on a display device associated with the surveillance module. The progress bar is associated with a video data stream captured by the surveillance module. The method further comprises identifying a marking event associated with a first time, and in response to identifying the marking event, displaying a first marker on the progress bar. The first marker is displayed on the progress bar corresponding to a segment of the video data stream captured at the first time.

### BRIEF DESCRIPTION OF THE DRAWINGS

Embodiments of the subject matter will hereinafter be described in conjunction with the following drawing figures, wherein like numerals denote like elements, and

FIG. 1 is a block diagram of an unmanned aerial vehicle in accordance with one embodiment;

FIG. 2 is a block diagram of an exemplary control unit suitable for use with the unmanned aerial vehicle of FIG. 1 in accordance with one embodiment;

FIG. 3 a schematic view of an exemplary map suitable for use with the control unit of FIG. 2 in accordance with one embodiment;

FIG. 4 is a flow diagram of a video streaming process suitable for use with the control unit of FIG. 2 in accordance with one embodiment; and

FIG. 5 is a schematic view of a segment of a buffered video data stream suitable for use with the video streaming process of FIG. 5 in accordance with one embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting. For example, terms such as "first", "second" and other such numerical terms referring to structures do not imply a sequence or order unless clearly indicated by the context.

For the sake of brevity, conventional techniques related to graphics and image processing, video processing, video data streaming and/or data transfer, video surveillance systems, navigation, flight planning, unmanned vehicle controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Technologies and concepts discussed herein relate generally to unmanned vehicle-based video surveillance applications. Although the subject matter may be described herein in the context of an unmanned aerial vehicle, various aspects of the subject matter may be implemented in other surveillance applications (e.g., non-vehicle-based applications) or with other unmanned vehicles, for example, unmanned ground vehicles or unmanned underwater vehicles, or any other surveillance vehicle (manned or unmanned) that is capable of autonomous operation (e.g., equipped with autopilot or a comparable feature), and the subject matter is not intended to be limited to use with any particular vehicle. As described below, in an exemplary embodiment, graphical indicators that correspond to various spatial criteria (such as waypoints in a flight plan) are displayed overlying a video timeline. The graphical indicators are positioned along the video timeline in a manner that corresponds to the unmanned vehicle reaching the particular spatial criterion (e.g., reaching a particular waypoint). The user may then quickly ascertain the spatial and temporal relationship between a segment of video currently being reviewed and the flight plan. As a result, the user may review and analyze a surveillance video data stream with improved spatial and temporal awareness and/or situational awareness, thereby improving the accuracy and/or effectiveness of the intelligence information being gathered.

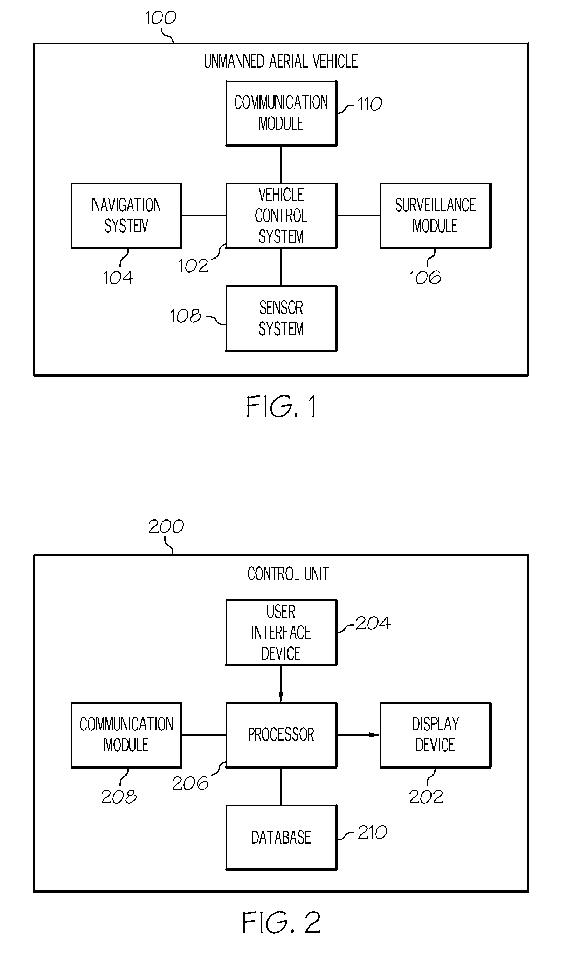

FIG. 1 depicts an exemplary embodiment of an unmanned aerial vehicle (UAV) 100 suitable for use in an aerial vehicle surveillance system. In an exemplary embodiment, the UAV 100 is a micro air vehicle (MAV) capable of autonomous operation in accordance with a predetermined flight plan obtained and/or downloaded from an associated ground control station, as described below. The UAV 100 may include, without limitation, a vehicle control system 102, a navigation system 104, a surveillance module 106, a sensor system 108, and a communication module 110. It should be understood that FIG. 1 is a simplified representation of a UAV 100 for purposes of explanation and ease of description, and FIG. 1 is not intended to limit the application or scope of the subject matter in any way. In practice, the UAV 100 may include numerous other devices and components for providing additional functions and features, as will be appreciated in the art.

In an exemplary embodiment, the vehicle control system 102 is coupled to the navigation system 104, the surveillance module 106, the sensor system 108, and the communication module 110. The vehicle control system 102 generally represents the hardware, software, firmware, processing logic, and/or other components of the UAV 100 that enable the UAV 100 to achieve unmanned operation and/or flight based upon a predetermined flight plan in order to acquire video and/or other surveillance data for a desired surveillance target and/or region. In this regard, the vehicle control system 102 and the communication module 110 are cooperatively configured to allow the transferring and/or downloading of a flight plan from an associated ground control station to the vehicle control system 102 along with the transferring and/or uploading of surveillance data (e.g., video data or photographic data) from the surveillance module 106 to the ground control station.

In an exemplary embodiment, the UAV 100 operates in conjunction with an associated ground control station or control unit, as described in greater detail below. In this regard, the UAV 100 and the associated ground control station are preferably configured to support bi-directional peer-to-peer communication. The communication module 110 generally represents the hardware, software, firmware, processing logic, and/or other components that enable bi-directional communication between the UAV 100 and the associated ground control station or control unit, as will be appreciated in the art. In this regard, the communication module 110 may support one or more wireless data communication protocols. Any number of suitable wireless data communication protocols, techniques, or methodologies may be supported by the communication module 110, as will be appreciated in the art. In addition, the communication module 110 may include a physical interface to enable a direct physical communication medium between the UAV 100 and the associated ground control station.

In an exemplary embodiment, the navigation system 104 is suitably configured to support unmanned flight and/or operation of the unmanned aerial vehicle. In this regard, the navigation system 104 may be realized as a global positioning system (GPS), inertial reference system (IRS), or a radio-based navigation system (e.g., VHF omni-directional radio range (VOR) or long range aid to navigation (LORAN)), and may include one or more sensors suitably configured to support operation of the navigation system 104, as will be appreciated in the art. In an exemplary embodiment, the navigation system 104 is capable of obtaining and/or determining the current geographic position and heading of the UAV 100 and providing these navigational parameters to the vehicle control system 102 to support unmanned flight and/or unmanned operation of UAV 100. In this regard, the current geographic position should be understood as comprising the three-dimensional position of the UAV 100, that is, the current geographic position includes the geographic coordinates or real-world location (e.g., the latitude and longitude) of the UAV 100 along with the altitude or above ground level of the UAV 100.

In an exemplary embodiment, the surveillance module 106 is realized as at least one camera adapted to capture surveillance data (e.g., images and/or video) for a viewing region proximate the UAV 100 during operation. In this regard, the camera may be realized as a video camera, an infrared camera, a radar-based imaging device, a multi-spectral imaging device, or another suitable imaging camera or device. For example, in accordance with one embodiment, the surveillance module 106 comprises a first video camera that is positioned and/or angled downward (e.g., the camera lens is directed beneath the unmanned aerial vehicle) and a second video camera positioned and/or angled such that the lens points outward from the UAV 100 aligned with the horizontal line of travel (e.g., the camera lens is directed straight out or forward). In an exemplary embodiment, the vehicle control system 102 and the communication module 110 are cooperatively configured to allow the transferring and/or uploading of surveillance data (e.g., video data or photographic data) from the surveillance module 106 to a control unit or ground control station, as will be appreciated in the art.

In an exemplary embodiment, a sensor system 108 is configured to sense or otherwise obtain information pertaining to the operating environment proximate the UAV 100 during operation of the UAV 100. It will be appreciated that although FIG. 1 shows a single sensor system 108, in practice, additional sensor systems may be present. In various embodiments, the sensor system 108 may include one or more of the following: motion sensors, infrared sensors, temperature or thermal sensors, photosensors or photodetectors, audio sensors or sound sensors, an obstacle detection system, and/or another suitable sensing system. These and other possible combinations of sensors may be cooperatively configured to support operation of the UAV 100 as described in greater detail below. In accordance with one or more embodiments, the UAV 100 and/or vehicle control system 102 is suitably configured to identify, detect, or otherwise process a trigger event based on data and/or information obtained via sensor system 108, as described below.

FIG. 2 depicts an exemplary embodiment of a control unit 200 suitable for operation with the UAV 100. The control unit 200 may include, without limitation, a display device 202, a user interface device 204, a processor 206, a communication module 208 and at least one database 210 suitably configured to support operation of the control unit 200 as described in greater detail below. In an exemplary embodiment, the control unit 200 is realized as a ground control station and the control unit 200 is associated with the UAV 100 as described above. That is, the communication module 208 is suitably configured for bi-directional communication between the control unit 200 and the UAV 100 such that the control unit 200 and the UAV 100 are communicatively coupled, as described above in the context of FIG. 1. In an exemplary embodiment, the communication module 208 is adapted to upload or otherwise transfer a flight plan to the UAV 100, as described below.

It should be understood that FIG. 2 is a simplified representation of a control unit 200 for purposes of explanation and ease of description, and FIG. 2 is not intended to limit the application or scope of the subject matter in any way. In practice, the control unit 200 may include numerous other devices and components for providing additional functions and features, as will be appreciated in the art. For example, the control unit 200 may be coupled to and/or include one or more additional modules or components as necessary to support navigation, flight planning, and other conventional unmanned vehicle control functions in a conventional manner. Additionally, although FIG. 2 depicts the control unit 200 as a standalone unit, in some embodiments, the control unit 200 may be integral with the UAV 100.

In an exemplary embodiment, the display device 202 is coupled to the processor 206, which in turn is coupled to the user interface device 204. In an exemplary embodiment, the display device 202, user interface device 204, and processor 206 are cooperatively configured to allow a user to define a flight plan for the UAV 100. For example, a user may create the flight plan by manually entering or defining a series of waypoints that delineate a desired flight path for the UAV 100. As used herein, a waypoint should be understood as defining a geographic position in three-dimensional space, for example, the waypoint comprise latitude and longitude coordinates in conjunction with an above ground level or altitude. It should be noted that a waypoint may also be associated with a waypoint type (e.g., fly over, fly by, etc.) that defines a particular action to be undertaken by the UAV 100 in association with the waypoint, as will be appreciated in the art. The processor 206 is coupled to the database 210, and the processor 206 is configured to display, render, or otherwise convey one or more graphical representations or images of the terrain and/or objects proximate the UAV 100 on the display device 202, as described in greater detail below. In an exemplary embodiment, the processor 206 is coupled to the communication module 208 and cooperatively configured to communicate and/or upload a flight plan to the UAV 100.

In an exemplary embodiment, the display device 202 is realized as an electronic display configured to display a surveillance video data stream obtained from the UAV 100 under control of the processor 206. In some embodiments, the display device 202 may also display a map of the real-world terrain and/or objects proximate the associated unmanned aerial vehicle 100, along with flight planning information and/or other data associated with operation of the UAV 100. Depending on the embodiment, the display device 202 may be realized as a visual display device such as a monitor, display screen, flat panel display, or another suitable electronic display device. In various embodiments, the user interface device 204 may be realized as a keypad, touchpad, keyboard, mouse, touchscreen, stylus, joystick, or another suitable device adapted to receive input from a user. In an exemplary embodiment, the user interface device 204 is adapted to allow a user to graphically identify or otherwise define the flight plan for the UAV 100 on the map rendered on the display device 202, as described below. It should also be appreciated that although FIG. 2 shows a single display device 202 and a single user interface device 204, in practice, multiple display devices and/or user interface devices may be present.

The processor 206 may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this regard, the processor 206 may be realized as a microprocessor, a controller, a microcontroller, a state machine, or the like. The processor 206 may also be implemented as a combination of computing devices, e.g., a combination of a digital signal processor and a microprocessor, a plurality of microprocessors, one or more microprocessors in conjunction with a digital signal processor core, or any other such configuration. In practice, the processor 206 includes processing logic that may be configured to carry out the functions, techniques, and processing tasks associated with the operation of the control unit 200, as described in greater detail below. Furthermore, the steps of a method or algorithm described in connection with the embodiments disclosed herein may be embodied directly in hardware, in firmware, in a software module executed by processor 206, or in any practical combination thereof.. In this regard, the processor 206 may access or include a suitable amount of memory configured to support streaming video data on the display device 202, as described below. In this regard, the memory may be realized as RAM memory, flash memory, registers, a hard disk, a removable disk, or any other form of storage medium known in the art.

In some alternative embodiments, although not separately depicted in FIG. 1, the UAV 100 may include a processor that is similar to that described above for processor 206. Indeed, some of the operations and functionality (described in more detail below) supported by the control unit 200 may additionally or alternatively be supported by the UAV 100, using one or more suitably configured processors, or such operations and functionality may be otherwise supported by the vehicle control system 102.

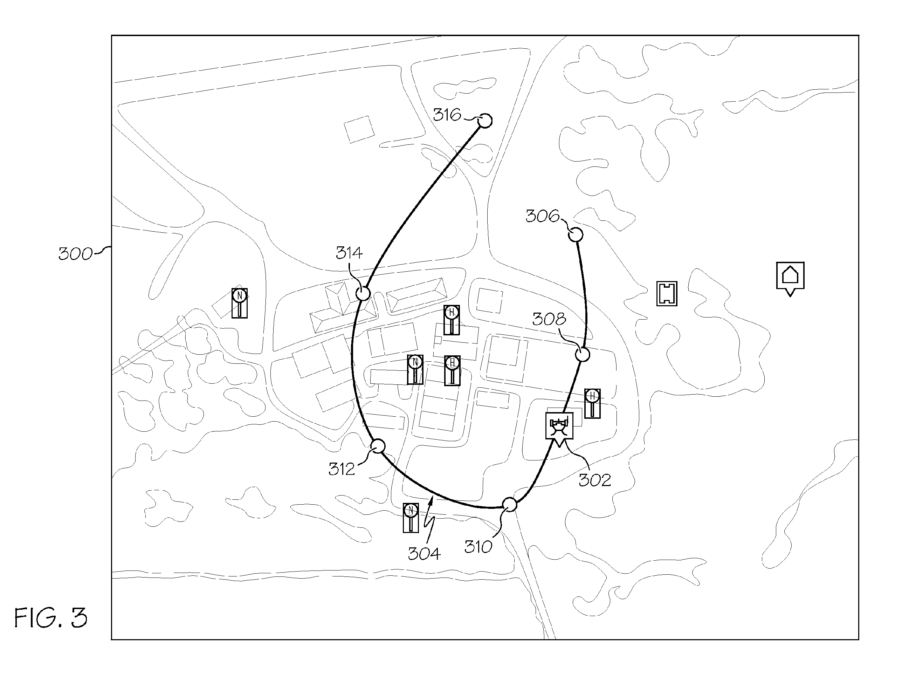

Referring now to FIG. 3, and with continued reference to FIG. 1 and FIG. 2, in an exemplary embodiment, the processor 206 includes or otherwise accesses a database 210 containing terrain data, obstacle data, elevation data, or other navigational information, such that the processor 206 controls the rendering of a map 300 of the terrain, topology, obstacles, objects, and/or other suitable items or points of interest within an area proximate the UAV 100 on the display device 202. The database 210 may be realized in memory, such as, for example, RAM memory, flash memory, registers, a hard disk, a removable disk, or any other form of storage medium known in the art. The database 210 is coupled to the processor 206 such that the processor 206 can read information from the database 210. In some embodiments, the database 210 may be integral to the processor 206.

Depending on the embodiment, the map 300 may be based on one or more sectional charts, topographic maps, digital maps, or any other suitable commercial or military database or map, as will be appreciated in the art. The processor 206 may also be configured to display a graphical representation of the unmanned aerial vehicle 302 at a location on the map 300 that corresponds to the current (i.e., real-time) geographic position of the UAV 100. Although FIG. 3 depicts a top view (e.g., from above the unmanned aerial vehicle) of the map 300, in practice, alternative embodiments may utilize various perspective views, such as side views, three-dimensional views (e.g., a three-dimensional synthetic vision display), angular or skewed views, and the like, and FIG. 3 is not intended to limit the scope of the subject matter in any way. In the illustrated embodiment embodiment, the control unit 200 and/or processor 206 is adapted to generate a flight plan for the UAV 100 that comprises a sequence of waypoints and display a graphical representation of the flight plan 304 comprising the sequence of waypoints 306, 308, 310, 312, 314, 316 on the map 300.

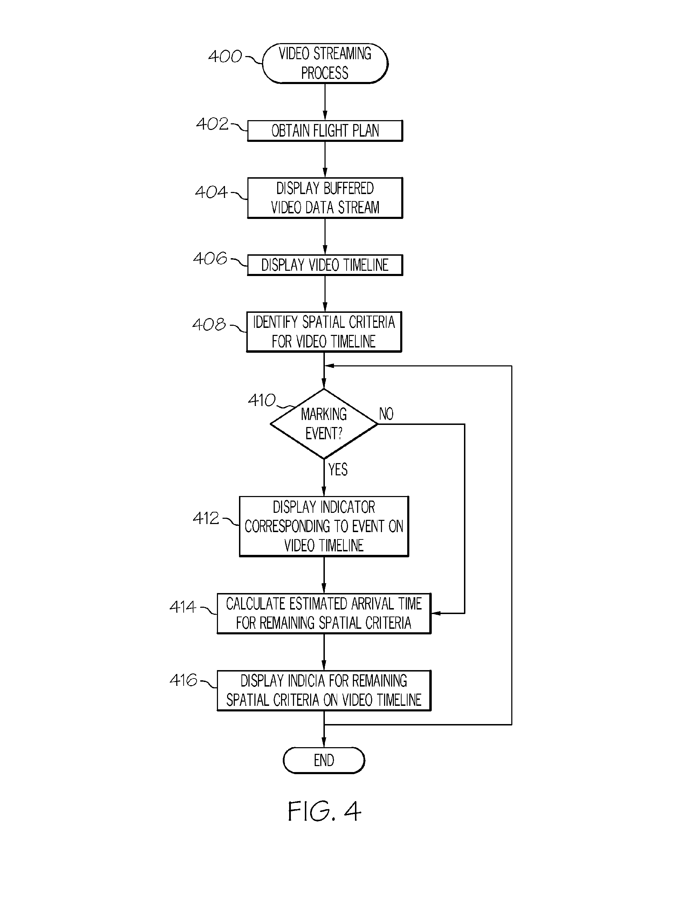

Referring now to FIG. 4, in an exemplary embodiment, a control unit and/or UAV may be configured to perform a video streaming process 400 and additional tasks, functions, and operations described below. The various tasks may be performed by software, hardware, firmware, or any combination thereof. For illustrative purposes, the following description may refer to elements mentioned above in connection with FIG. 1 and FIG. 2. In practice, the tasks, functions, and operations may be performed by different elements of the described system, such as the vehicle control system 102, the navigation system 104, the surveillance module 106, the sensor system 108, the display device 202, the user interface device 204, the processor 206, or the communication module 208. It should be appreciated that any number of additional or alternative tasks may be included, and may be incorporated into a more comprehensive procedure or process having additional functionality not described in detail herein.

Referring to FIG. 4, and with continued reference to FIG. 1 and FIG. 2, a video streaming process 400 may be performed to indicate the relationship between a video data stream associated with surveillance module onboard a vehicle (e.g., surveillance module 106 onboard UAV 100) and a flight plan (or travel plan) or other events relating to operation of the vehicle. Although the video streaming process 400 is described herein in a UAV-based surveillance context, it should be understood that the subject matter may be similarly utilized in other streaming video applications or with video content other than surveillance video, and the subject matter described herein is not intended to be limited to surveillance applications and/or surveillance video or otherwise limited to use with unmanned vehicles.

In an exemplary embodiment, the video streaming process 400 may initialize by obtaining a flight plan (or travel plan) for an unmanned vehicle (task 402). As used herein, a flight plan or travel plan should be understood as referring to a sequence of real-world locations or waypoints that delineate or otherwise define a proposed travel path for a vehicle, and may include other spatial parameters. In this regard, a flight plan for the UAV 100 comprises a plurality of waypoints, where each waypoint defines a particular location or position in three-dimensional space. In this regard, FIG. 3 depicts a two-dimensional representation of a flight plan 304 comprising a sequence of waypoints 306, 308, 310, 312, 314, 316, although it should be understood that in practice, the waypoints 306, 308, 310, 312, 314, 316 may also define an altitude or above ground level for each location. In an exemplary embodiment, the flight plan is generated by the control unit 200 and uploaded or otherwise transferred to the UAV 100. In this regard, the vehicle control system 102 may be configured to receive the flight plan from the control unit 200 (e.g., via communication module 110) in a conventional manner. In an exemplary embodiment, the vehicle control system 102 and navigation system 104 are cooperatively configured to fly, operate, or otherwise maneuver the UAV 100 through the sequence of waypoints of the flight plan during operation of the UAV 100. For example, the vehicle control system 102 and/or navigation system 104 may fly the UAV 100 to the first waypoint 306, from the first waypoint 306 to the second waypoint 308, from the second waypoint 308 to the third waypoint 310, and so on. In this manner, the flight plan controls autonomous operation (e.g., unmanned flight) of the UAV 100 during execution of the flight plan.

In an exemplary embodiment, during execution of the flight plan, the UAV 100 captures a video data stream during execution of the flight plan and the control unit 200 receives and buffers the video data stream. As used herein, buffering the video data stream should be understood as referring to the process of temporarily storing data as it is received from another device, and may be implemented in either hardware or software, as will be appreciated in the art. In this regard, the processor 206 may buffer a real-time surveillance video data stream that is captured by the surveillance module 106 and downloaded or otherwise received from the UAV 100 via communication module 208 to obtain a buffered video data stream. In this manner, the buffered video data stream may be utilized to hold or maintain the video data stream for display and/or rendering on the display device 202 at a time subsequent to when the video data stream is received by the control unit 200.

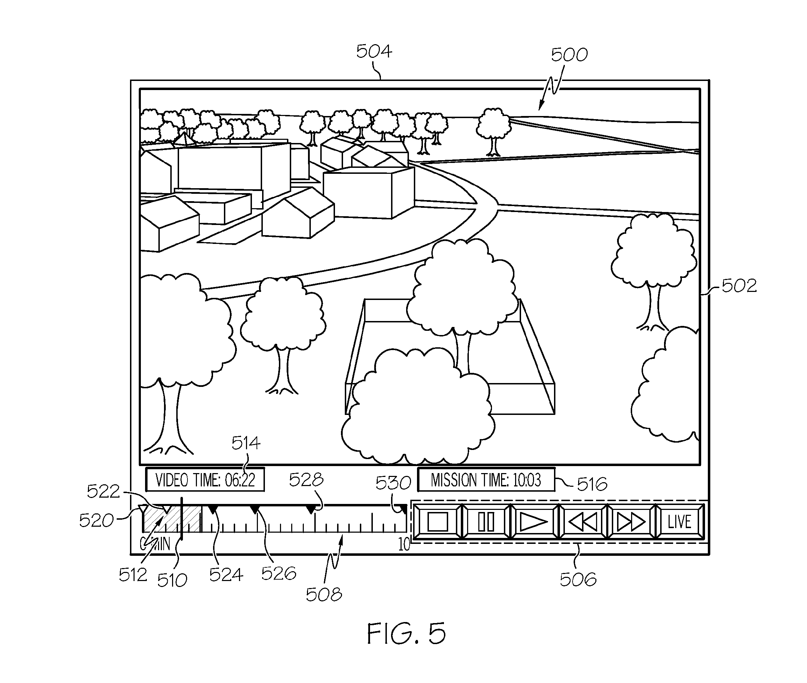

In an exemplary embodiment, the video streaming process 400 continues by displaying a first segment or portion of the buffered video data stream on a display device (task 404). For example, referring to FIG. 5, with continued reference to FIGS. 1-4, the video streaming process 400 may display and/or render a first segment 500 of the buffered video data stream in a viewing area 502 associated with a display application and presented on a display device 504. The video streaming process 400 may also be configured to display and/or render graphical tools 506 (e.g., buttons, objects, or the like) which allow a user to manipulate or otherwise control (e.g., via user interface device 204) the segment or portion of the surveillance video data stream that is being displayed on the display device 504 in a conventional manner. The user may select or identify, rewind, pause, slow down, or otherwise cause the video streaming process 400 to display and/or render a segment or portion of the video data stream that does not correspond to the real-time surveillance video data captured by the surveillance module (e.g., the segment 500 being displayed corresponds to a time in the past).

In an exemplary embodiment, the video streaming process 400 continues by displaying and/or rendering a video timeline (or alternatively, a progress bar) corresponding to the video data stream captured by the surveillance module on the display device (task 406). In this regard, each point or location on the video timeline corresponds to a particular segment of the video data stream that has been captured by the surveillance module at a particular instant in time. In an exemplary embodiment, the width or length of the video timeline is based at least in part a characteristic of the video data stream. In an exemplary embodiment, the width or length of the video timeline corresponds to the expected duration for the video data stream, that is, the estimated flight time for the UAV based on the flight plan. In this regard, the video timeline 508 may have a fixed width within the viewing area 502, wherein the time scale (e.g., the amount of time corresponding to an incremental increase in width of the progress segment 512) for the video timeline 508 is scaled based on the expected duration for the video data stream. In other words, the width (or length or duration) of the video timeline is based on the flight plan and is scaled so that the fixed width of video timeline 508 reflects the expected mission duration (e.g., the estimated flight time for the UAV). In an exemplary embodiment, the video timeline also includes a graphical feature that is used to indicate the relationship between duration of the video data stream that has already been captured relative to the expected duration of the video data stream.

For example, as shown in FIG. 5, the video streaming process 400 may be configured to display and/or render a video timeline 508 with a progress segment 512 that reflects the current duration of the video data stream that has already been captured. As shown, the video streaming process 400 may also display and/or render a graphical indicator 510 that shows the relationship between the segment 500 of the video data stream 500 currently being displayed on the display device 504 to the elapsed mission time (e.g., indicated by the progress segment 512) and the expected duration of the video data stream (e.g., indicated by the width of the video timeline 508). As shown, the video streaming process 400 may also display and/or render a textual representation of the video time 514 along with a textual representation of the elapsed mission time 516. In this regard, the video time 514 corresponds to the duration of the video data stream that corresponds to the segment 500 currently being displayed and the elapsed mission time 516 corresponds to the duration of the video stream that has already been captured. The width of the progress segment 512 corresponds to the elapsed mission time and indicates the temporal extent of the video data stream that has been obtained and/or captured by the surveillance module 106, and the graphical indicator 510 corresponds to the video time (e.g., the mission time corresponding to the segment 500 currently being rendered in the viewing area 502), such that the graphical indicator 510 provides a reference relative to the temporal extent of the video data stream that has already been obtained. It should be appreciated that video timeline 508 as depicted in FIG. 5 represents the state of a dynamic display frozen at one particular time, and that the video timeline 508 may be continuously refreshed during operation of the UAV 100, that is, the width of the progress segment 512 will progressively increase (e.g., towards the right of the display device 504) as the elapsed mission time increases (e.g., as the UAV 100 executes the flight plan and captures data). Furthermore, in some embodiments, the video timeline 508 may be rendered within the viewing area 502 and overlying the segment 500 currently displayed on the display device 504.

Referring again to FIG. 4, and with continued reference to FIG. 1, FIG. 2 and FIG. 5, in an exemplary embodiment, the video streaming process 400 continues by identifying one or more spatial criteria for displaying and/or rendering one or more indicators or markers on the video timeline (task 408). In this regard, a spatial criterion corresponds to a particular location, position, geographic constraint, geospatial criterion, or the like that designates or defines a marking event. In an exemplary embodiment, the spatial criteria comprise individual waypoints of the flight plan. In other embodiments, a spatial criterion may comprise a particular location of interest (e.g., a location input by a user via user interface 204) or a spatial constraint (e.g., a particular altitude, a particular latitude and/or longitude) for the UAV. As used herein, a marking event represents an event or occurrence previously deemed of interest that occurs during execution of the flight plan by the UAV 100 and is denoted on the video timeline with a graphical indicator or marker that corresponds to the time at which the marking event occurred. As described in greater detail below, the video streaming process 400 calculates, determines, or otherwise identifies when a marking event occurs (e.g., when the UAV 100 has satisfied a spatial criterion), and in response, displays and/or renders a graphical indicator or marker on the video timeline that denotes the time associated with the marking event. In this manner, the spatial criterion defines or creates a spatial reference that aids a user when reviewing the video data stream obtained by the surveillance module 106 onboard the UAV 100.

In an exemplary embodiment, the video streaming process 400 continues by determining or otherwise identifying whether a marking event has occurred, and in response to identifying or determining that a marking event has occurred, displaying and/or rendering a graphical indicator or marker on the video timeline that corresponds to the marking event (tasks 410, 412). In this regard, the graphical indicator or marker is displayed and/or rendered on the video timeline at a position that corresponds to the segment of the video data stream captured by the surveillance module at the time associated with the marking event, that is, the time at which the marking event occurred. Depending on the embodiment, a marking event may correspond to the UAV 100 satisfying a spatial criterion or the UAV 100 detecting a trigger event. As used herein, a trigger event should be understood as referring to a real-time event or occurrence in the environment proximate the UAV 100 that has been previously deemed of interest or satisfies some predetermined threshold criteria. In this regard, the sensor system 108 may be configured to detect or otherwise identify a trigger event. For example, depending on the embodiment, a trigger event may correspond to detecting and/or determining motion of an object that occurs within the viewing region of the camera and/or surveillance module 106, an auditory or acoustic event proximate the UAV 100, a presence of light, or an obstacle in the path of the UAV 100. It should be appreciated in the art that there are numerous possible trigger events, and the subject matter described herein is not limited to any particular trigger event.

In an exemplary embodiment, in response to identifying or determining that a marking event has occurred, the video streaming process 400 records or stores the time associated with the marking event (i.e., the real-time or elapsed mission time at the time of the marking event) and displays and/or renders a graphical indicator or marker that is positioned on the video timeline in a manner corresponding to the time associated with the marking event. For example, in accordance with one embodiment, the spatial criteria correspond to the waypoints of the flight plan, such that a marking event corresponds to the UAV 100 reaching a waypoint of the flight plan. The control unit 200 may obtain the current (i.e., real-time) geographic position of the UAV 100 (e.g., from the navigation system 104 via communication modules 110, 208) and compare the current geographic position of the UAV 100 to a waypoint of the flight plan, for example, the next (or upcoming) waypoint based on the sequence of waypoints defined by the flight plan. In response to determining that the current geographic position (e.g., the latitude, longitude and altitude) of the UAV 100 is within a threshold distance of the waypoint, the control unit 200 may record or store the current time (e.g., the elapsed mission time or real-time) and establish an association between the current time and the marking event. In this regard, the threshold distance is a radial distance (i.e., in any direction) from the waypoint that defines an imaginary sphere or zone centered about the waypoint. The threshold distance is preferably chosen to be small enough such that when the distance between the UAV 100 and the waypoint is less than the threshold distance (e.g., the UAV 100 is within the imaginary sphere about the waypoint), the geographic position of the UAV 100 is substantially equal to the waypoint (e.g., within practical and/or realistic operating tolerances). For example, the threshold distance may range from about zero to fifty feet, however, it will be appreciated that in practice, the threshold distance may vary depending upon UAV operating characteristics (e.g., navigation and/or positioning precision, range of the UAV onboard sensors) as well as the objectives of the flight plan. and/or operation. In response to the UAV 100 reaching the waypoint (e.g., coming within the threshold distance of the waypoint), a graphical indicator or marker corresponding to the waypoint is then displayed and/or rendered on the video timeline at a position that corresponds to the time the UAV 100 reached the waypoint.

For example, referring now to FIG. 3 and FIG. 5, the UAV 100 may initialize or begin capturing a video data stream at a first waypoint 306 of the flight plan 304. As shown, the video streaming process 400 may obtain the position of the UAV 100 when the UAV 100 begins executing the flight plan 304 and determine that the position of the UAV 100 is substantially equal to the first waypoint 306 of the flight plan 304. In response, the video streaming process 400 may store or record the time associated with the UAV 100 reaching the first waypoint 306 (e.g., satisfying a spatial criterion) and display and/or render a first graphical indicator or marker 520 that is positioned on the video timeline 508 such that the indicator 520 corresponds to the UAV 100 reaching the first waypoint 306 of the flight plan 304. As shown, in the case of the first waypoint 306 of the flight plan 304, the first indicator 520 is positioned on the video timeline 508 such that it corresponds to an elapsed mission time of zero (e.g., 0:00). As described in greater detail below, the video streaming process 400 is dynamic, such that the video streaming process 400 is continuously determining or otherwise identifying whether or not a marking event has occurred. In this regard, as the UAV 100 travels, the UAV 100 may satisfy additional spatial criteria (e.g., waypoints in the flight plan) or encounter a trigger event, thereby resulting in additional marking events and/or graphical indicators on the video timeline 508. The video streaming process 400 and/or control unit 200 may obtain the current position of the UAV 100 in a substantially continuous manner, and when the position of the UAV 100 is substantially equal to the second (or next) waypoint 308 of the flight plan 304, store or record the time associated with the UAV 100 reaching the second waypoint 308. In response, as shown in FIG. 5, the video streaming process 400 displays and/or renders a second graphical indicator 522 on the video timeline 508 that is positioned such that the second indicator 522 corresponds to the UAV 100 reaching the second waypoint 308 of the flight plan 304. In this manner, the graphical indicators 520, 522 relative to the extent of the progress segment 512 accurately reflect the spatial relationship of the UAV 302 relative to the waypoints 306, 308 that correspond to the graphical indicators 520, 522.

Referring again to FIG. 5, and with continued reference to FIGS. 1-4, in an exemplary embodiment, the video streaming process 400 continues by determining and/or calculating an estimated time of arrival (or alternatively, estimated arrival time) for any remaining spatial criteria, that is, any spatial criterion that the UAV 100 has not satisfied (task 414). For example, if the spatial criteria comprise the waypoints of the flight plan, the video streaming process 400 may calculate an estimated time of arrival for the UAV 100 for one or more subsequent waypoints, that is, the waypoints of the flight plan that the UAV 100 has not reached and/or traversed. The control unit 200 may obtain the current (i.e., real-time) position of the UAV 100 along with current operating parameters for the UAV 100 (e.g., the velocity and/or acceleration) and calculate the estimated arrival time for subsequent waypoints of the flight plan. In this regard, the estimated arrival time is based on the difference between the current geographic position of the UAV 100 and the geographic position defined by a respective waypoint and the current velocity and/or acceleration of the UAV 100.

In an exemplary embodiment, the video streaming process 400 displays and/or renders graphical indicia (e.g., graphical indicators or markers) on the video timeline that indicate the estimated arrival times for when the UAV 100 will satisfy the remaining spatial criteria (task 416). In this regard, the indicia are position on the video timeline in a manner that corresponds to the respective estimated arrival time for each spatial criterion, such that the indicia reflect expected or anticipated marking events that may occur at some point in the future. For example, referring now to FIG. 3 and FIG. 5, the video streaming process 400 may obtain the real-time position of the UAV 100 (e.g., the position of the UAV 100 at the elapsed mission time 516) and calculate the estimated arrival time for the third waypoint 310 of the flight plan 304 based on the distance between the third waypoint 310 and the current position of the UAV 100 and the current velocity and/or acceleration of the UAV 100. The video streaming process 400 displays and/or renders a graphical indicator 524 that is positioned on the video timeline 508 based on the estimated arrival time, such that the indicator 524 corresponds to the estimated arrival time for the third waypoint 310. In this manner, the relationship between the progress segment 512 and the graphical indicator 524 accurately reflects the spatial relationship between the UAV 302 and the third waypoint 310. In a similar manner, the video streaming process 400 may calculate and/or determine an estimated arrival time for the remaining waypoints 312, 314, 316 of the flight plan 304 and display and/or render indicators 526, 528, 530 corresponding to the estimated arrival time for a respective waypoint 312, 314, 316.

In an exemplary embodiment, the loop defined by tasks 410, 412, 414, and 416 repeats throughout execution of the flight plan by the UAV. In this manner, the indicia 524, 526, 528, 530 may be dynamically updated and adjusted to reflect the current operating status of the UAV 100. In some embodiments, the indicia 520, 522 for the marking events that have already occurred may be displayed and/or rendered using a first visually distinguishable characteristic and the indicia 524, 526, 528, 530 for the anticipated marking events may be displayed and/or rendered using a second visually distinguishable characteristic. In this regard, the first and second visually distinguishable characteristics may be chosen and utilized to enable a user to more readily identify the spatial criteria that have or have not been satisfied. Depending on the embodiment, a visually distinguishable characteristic may be realized by using one more of the following: shape, color, hue, tint, brightness, graphically depicted texture or pattern, contrast, transparency, opacity, animation (e.g., strobing, flickering or flashing), and/or other graphical effects.

To briefly summarize, the methods and systems described above allow a user to quickly ascertain the spatial relationship between a segment of a surveillance video data stream from a surveillance module onboard a UAV that is currently being reviewed and the flight plan that the UAV is currently executing. By positioning graphical indicators that correspond to various spatial criteria (such as waypoints in a flight plan) positioned along a video timeline in a manner that reflects the current status of the UAV, the user may review and analyze the surveillance video data stream with improved spatial awareness and/or situational awareness and without the complexity of manually correlating the surveillance video with the UAV position. As a result, the effectiveness of the intelligence information being gathered by the UAV is improved while at the same time improving the efficiency and accuracy of such information gathering.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It being understood that various changes may be made in the function and arrangement of elements described in an exemplary embodiment without departing from the scope of the subject matter as set forth in the appended claims.

## Claims

1. A method for displaying a video data stream captured by a surveillance module (106) associated with an aerial vehicle (100) during execution of a flight plan (304), the method comprising:
displaying a timeline (508) on a display device (202) associated with the aerial vehicle (100), the timeline (508) corresponding to the video data stream; and
displaying a first indicator (520) on the timeline (508), the first indicator (520) corresponding to a first waypoint (306) of the flight plan (304), wherein the first indicator (520) is positioned on the timeline (508) such that the first indicator (520) corresponds to a first segment of the video data stream at a first time, the first time being based at least in part on a position of the aerial vehicle (100).

2. The method of claim 1, further comprising determining a position of the aerial vehicle (100) is within a threshold distance of the first waypoint (306) at the first time.

3. The method of claim 2, further comprising obtaining a current position of the aerial vehicle (100) at the first time, wherein the first indicator (520) is displayed in response to determining that the current position is within the threshold distance of the first waypoint (306).

4. The method of claim 3, further comprising storing the first time in response to determining the current position is within the threshold distance of the first waypoint (306) at the first time.

5. The method of claim 1, wherein displaying the first indicator (520) comprises:
obtaining a current position of the aerial vehicle (100); and
calculating an estimated arrival time for the first waypoint (306) based at least in part on the current position of the aerial vehicle (100), wherein the first indicator (520) is displayed on the timeline (508) corresponding to the estimated arrival time.

6. The method of claim 1, wherein displaying the timeline (508) comprises displaying a video timeline (508) that corresponds to expected duration of the video data stream based on the flight plan (304).

7. The method of claim 6, wherein displaying the first indicator (520) comprises rendering the first indicator (520) overlying the video timeline (508).

8. The method of claim 1, further comprising displaying a second indicator (522) on the timeline (508), the second indicator (522) corresponding to a second segment of the video data stream currently displayed on the display device (202).

9. The method of claim 1, further comprising:
operating the aerial vehicle (100) based on the flight plan (304); and
capturing the video data stream using the surveillance module (106) while the aerial vehicle (100) is operated based on the flight plan (304).

10. A surveillance system comprising:
an unmanned aerial vehicle (200) having a surveillance module (106) adapted to capture a video data stream corresponding to a viewing region proximate the unmanned aerial vehicle (200);
a display device (202); and
a control unit (200) communicatively coupled to the unmanned aerial vehicle (200), wherein the control unit (200) is coupled to the display device (202) and configured to:
generate a flight plan (304) for the unmanned aerial vehicle (200);
upload the flight plan (304) to the unmanned aerial vehicle (200), wherein the flight plan (304) controls autonomous flight of the unmanned aerial vehicle (200);
display a timeline (508) corresponding to the video data stream on the display device (202); and
display a first indicator (520) on the timeline (508), the first indicator (520) corresponding to a first waypoint (306) of the flight plan (304), wherein the first indicator (520) is positioned on the timeline (508) such that the first indicator (520) corresponds to a segment of the video data stream at a first time, the first time being based at least in part on a position of the unmanned aerial vehicle (302).
